(19) Europäisches Patentamt
European Patent Office
Office européen des brevets

(11) **EP 1 873 534 B1**

(12) **EUROPÄISCHE PATENTSCHRIFT**

(45) Veröffentlichungstag und Bekanntmachung des Hinweises auf die Patenterteilung:
**21.09.2011 Patentblatt 2011/38**

(21) Anmeldenummer: **07012623.0**

(22) Anmeldetag: **27.06.2007**

(51) Int Cl.:
*G01P 3/487* (2006.01)    *G01P 3/489* (2006.01)
*G01D 5/14* (2006.01)    *G01D 5/245* (2006.01)

(54) **Vorrichtung zur berührungsfreien Erfassung der Drehzahl und/oder Position eines Geberteils mit einem Encoder**

Device for contactless determination of rotation and/or position of an object having an encoder

Dispositif pour déterminer, sans contact, la vitesse de rotation et/ou la position d'un objet doté d'un codeur

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.07.2006 DE 102006030469**

(43) Veröffentlichungstag der Anmeldung:
**02.01.2008 Patentblatt 2008/01**

(73) Patentinhaber: **Carl Freudenberg KG**
**69469 Weinheim (DE)**

(72) Erfinder:
• **Gund, Christoph**
**69221 Dossenheim (DE)**

• **Geisau, Markus von**
**68259 Mannheim (DE)**
• **Salagnac, Laurent**
**52200 Langres (FR)**
• **Heinrich, Ralf**
**67365 Schwegenheim (DE)**
• **Mutterer, Heinz**
**76532 Baden-Baden (DE)**
• **Leins, Robert**
**68259 Mannheim (DE)**

(56) Entgegenhaltungen:
**EP-A- 0 496 918     EP-A- 0 825 420**
**DE-A1- 4 418 539**

**Beschreibung**

Die Erfindung befasst sich mit einer Vorrichtung zur berührungsfreien Erfassung der Drehzahl und/oder Position eines um eine Achse drehbaren Geberteils mit einem permanentmagnetischen Encoder in Ringform mit in Umfangsrichtung abwechselnd angeordneten regulären Nord- und Südpolen und wenigstens einem unregelmäßigen Pol sowie mit einem Abtastkopf mit einem Differenzen-Hallsensor.

Vorrichtungen dieser Art finden eine vielseitige Anwendung zur Ermittlung der Drehzahl einer Welle oder auch zur Positionserfassung der Welle. Der Encoder ist am Geberteil angebracht, und ein Abtastkopf liefert entsprechende Signale, aus denen die Drehzahl- oder Positionsinformation abgeleitet werden kann.

Stand der Technik

Aus der US 2003/0116703 A1 ist eine Vorrichtung bekannt geworden, bei der der Encoder mit abwechselnden regulären Nord- und Südpolen ausgerüstet ist und der mit einem Abtastkopf mit einem Differenzen-Hallsensor versehen ist. Um eine Positionsbestimmung vornehmen zu können, ist der Encoder mit wenigstens einer Unregelmäßigkeit bei der Polausbildung auf seinem Umfang versehen. Diese Unregelmäßigkeit besteht darin, dass ein ausgewählter Pol mit einer größeren Winkellänge oder Bogenmaß hergestellt wird und dass dieser Pol eine besondere Gestalt erhält mit einer speziellen Magnetisierung. Ein solcher Encoder ist nur schwer herzustellen, weil die geometrische Gestalt der unregelmäßigen Pole schwierig zu magnetisieren ist. Auch führen Abweichungen bei der Anbringung des Abtastkopfes mit den darin befindlichen Sensoren aus seiner axialen Position zu Fehlern bei der Detektierung der Teilung.

Eine andere Möglichkeit, insbesondere zur Positionserfassung, zeigt die EP 0 496 918 A1. Dort werden in einem Abtastkopf zwei im Abstand voneinander angebrachte Hall-Sensoren verwendet, die ein Sensorsignal abgeben, wenn sie einer Markierung des Geberteils gegenüberstehen. Als Geberteil können zwei gegeneinander verdrehte Zahnräder verwendet werden, wobei jedem Zahn des einen Zahnrads eine Lücke des anderen Zahnrads gegenübersteht. Die mit dieser Vorrichtung erreichbaren Symmetrieeigenschaften sind nicht zufrieden stellend.

Die EP 0 825 420 A1 zeigt einen Winkelgeber mit zwei spiegelbildlichen Spuren bei dem ein Bereich mit hoher Permeabilität auf einer Spur zu einem Bereich mit geringer Permeabilität auf der anderen Spur benachbart ist. Als Sensoren werden bei jeder Spur Doppelelement-Magnetwiderstands-Sensoren verwendet.

Darstellung der Erfindung

Der Erfindung liegt die Aufgabe zugrunde, die Nachteile der bisher bekannten Vorrichtungen zu vermeiden und eine Vorrichtung zu erstellen, die einfach in der Herstellung ist und eine sichere Ermittlung der Drehzahl bzw. der Position des Geberteils erlaubt. Insbesondere sollen die auftretenden Einbrüche des magnetischen Feldes in der Mitte von breiten und sehr breiten Polen keinen Einfluß auf die korrekte Funktionalität des Systems Encoder-Sensor haben. Eine genaue Winkelmessung des Geberteils soll erreicht werden.

Die Lösung der gestellten Aufgabe wird mit den Merkmalen des Anspruchs 1 erreicht. Die abhängigen Ansprüche 2 bis 8 sind vorteilhafte weitere Ausbildungen des Erfindungsgegenstandes. Um die gestellte Aufgabe erfüllen zu können, wird die eingangs genannte Vorrichtung mit einem Doppelspurencoder mit entgegengesetzter Magnetisierung ausgestattet und jeder Encoderspur je ein Sensorelement des Differenzen-Hallsensors zugeordnet. In Versuchen hat sich gezeigt, dass eine solche Vorrichtung eine hohe Stabilität des Magnetfelds ergibt, und darüber hinaus der Teilungsfehler beim Sensorabstand vernachlässigbar gering ist. Der radiale Abstand des Sensors von der Encoderoberfläche hat kaum Einfluss auf die Genauigkeit der Detektierung der Position des Geberteils. Auch wird die Abhängigkeit der Empfindlichkeit der Messung von der Polbreite weitgehendst vermieden. Durch die entgegengesetzte Magnetisierung der Pole der einzelnen Spuren und die Zuordnung von je einem Sensorelement des Differenzen-Hallsensors zu einer Spur werden zwei Signale erstellt, deren Verlauf je einer Spur und einem Sensorelement zugeordnet ist und die in ihren Plus- und Minusbereichen entgegengesetzt ausgerichtet sind.

Um eine Positionsmessung vornehmen zu können, wird wenigstens einer der Pole einer Spur in Umfangsrichtung mit einer größeren Polbreite als die angrenzenden Pole ausgeführt. Diesem Pol, mit dem größeren Bogenmaß in der einen Spur, wird ein entgegengesetzter Pol mit der gleichen Polbreite auf der anderen Spur zugeordnet.

Bevorzugt werden die axialen Spurbreiten der einzelnen Spuren gleich groß ausgebildet. Die Sensorelemente werden axial benachbart nebeneinander angebracht. Der axiale Abstand A zwischen den Sensorelementen bestimmt, wie weit das System Sensor-Encoder axial gegeneinander verschoben werden kann, bis die Funktion nicht mehr gewährleistet ist. Der Funktionsbereich ist mit dem halben Abstand der Sensorelemente in beiden Richtungen begrenzt. Darüber hinaus bestimmt der Abstand A, ab welcher Polbreite PB in [°] eine Unabhängigkeit der Winkelposition der Polgrenze vom Sensorabstand allein durch physikalische Kompensationseffekte/Symmetriegründe gegeben ist. Ab einer Polbreite $PB > \dfrac{A \cdot 360°}{\Pi\,D}$ setzen die Kompensationseffekte

ein ab $PB > \dfrac{2 \cdot A \cdot 360°}{\Pi\,D}$ ist die Polgrenze unabhängig vom Sensorabstand. Hierdurch entfällt die Optimierung des Magnetisierwerkzeugs. Dies erfolgt nach folgenden Begebenheiten: π x D x PB geteilt durch 360°. Der axiale Abstand A ist kleiner zu wählen als das errechnete Ergebnis. Sehr vorteilhaft ist es für die Reduktion von Distanzfehlern, wenn der axiale Abstand A zwischen den Sensorelementen kleiner als π x D x PB geteilt durch 2 x 360° ist. Idealer Weise ist der Sensor so zu wählen, dass der Abstand A zwischen den Sensorelementen der halben Polbreite PB des kleinsten Pols des Doppelspurencoders entspricht. (π = Pi = 3,1416).

Darstellung der Erfindung

Anhand des in der Zeichnung dargestellten Ausführungsbeispiels wird die Erfindung nachstehend näher erläutert.

Es zeigt:

Fig. 1    in schematischer Darstellung einen Doppelspurencoder in der Draufsicht mit einem Differenzen-Hallsensor

Fig. 2    einen Ausschnitt des Magnetfeldes, aufgetragen über dem aus der Figur 1 dargestellten Abschnitt des Encoders und

Fig. 3    einen Ausschnitt eines Magnetfeldes mit unterschiedlichen Polbreiten.

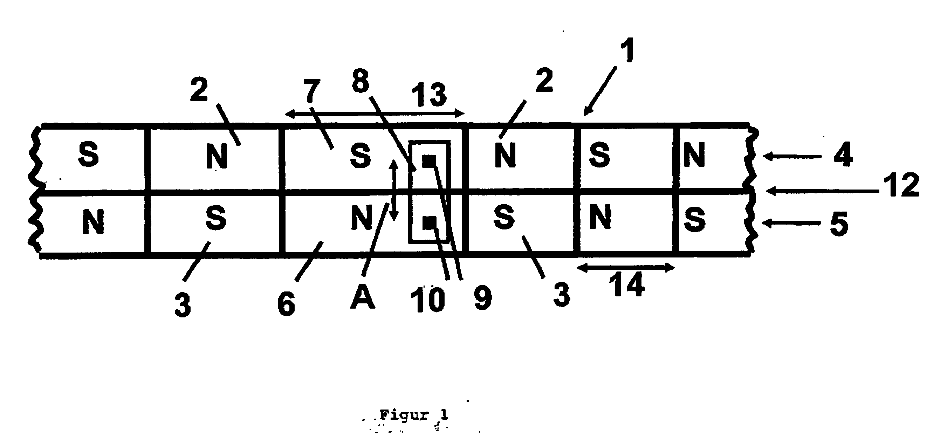

Auf die Darstellung der einzelnen Teile der Vorrichtung wird verzichtet, da dieselben an sich bekannt sind und aus der eingangs genannten US-Druckschrift zum Stand der Technik auch zu entnehmen sind. In der Figur 1 ist deshalb im Ausschnitt die Oberfläche eines Encoders dargestellt, der als Doppelspurencoder 1 ausgebildet ist, und zwar mit entgegengesetzter Magnetisierung der regulären Nord- und Südpole 2 und 3. Auf jeder Encoderspur 4 und 5 sind eine entsprechende Anzahl von Polen 2 und 3 angebracht. Die Anzahl der Pole 2 und 3 wird durch den vorgegebenen Teilungswinkel bestimmt, der in der Regel zwischen 3° und 12° bei den regulären Polen 2 und 3 liegt. Die Polbreite oder die Winkellänge 14 ist für jeden regulären Pol 2 oder 3 gleich groß. Neben den regulären Polen 2 und 3 sind auf jeder Encoderspur 4 und 5 unregelmäßige Pole 6 und 7, mit einer größeren Winkellänge 13 (Polbreite) angebracht, die ebenfalls zueinander eine entgegengesetzte Magnetisierung aufweisen. Dem Doppelspurencoder 1 ist der Differenzen-Hallsensor 8 zugeordnet, und zwar so, dass jeder Spur 4, 5 ein Sensorelement 9, 10 zugeordnet ist. Die Ausbildung des Encoders mit regulären Polen 2 und 3 sowie mit unregelmäßigen Polen 6 und 7 erlaubt sowohl die Erfassung der Drehzahl einer Welle, als auch die Positionsbestimmung der Welle mit den daran angebrachten Nocken oder dergleichen. Die jeweils einander zugewandten Polbreiten PB S und PB N der Spuren 4 und 5 sind gleichgroß. Der Differenzen-Hallsensor 8 wird mittig zu der zwischen den Spuren 4 und 5 liegenden Mittelebene 12 angebracht. Dabei hat es sich als günstig erwiesen, wenn der axiale Abstand A zwischen den Sensorelementen 9 und 10 weniger als der halben Polbreite PB (14) des kleinsten Pols 2, 3 des Doppelspurencoders 1 entspricht, In Versuchen zeigte sich, dass allgemein der axiale Abstand A zwischen den Sensorelementen 9 und 10 in einem bestimmten Verhältnis zum Durchmesser D des Encoders und zur Polbreite PB R der regulären Pole 2, 3 des Doppelspurencoders 1 ist und nach π x D x PB R geteilt durch 360° errechnet werden kann. Dabei ist es besonders günstig, wenn die Berechnung mit der halben Polbreite durchgeführt wird π x D x PB R geteilt durch 2 x 360°. Hierdurch wird ein besonders guter Kompensationseffekt erreicht. In Versuchen zeigte sich, dass bei dieser Ausbildung der Vorrichtung sehr gute Messergebnisse sowohl bezüglich der Drehzahl als auch der Positionsbestimmung ermittelt werden konnten.

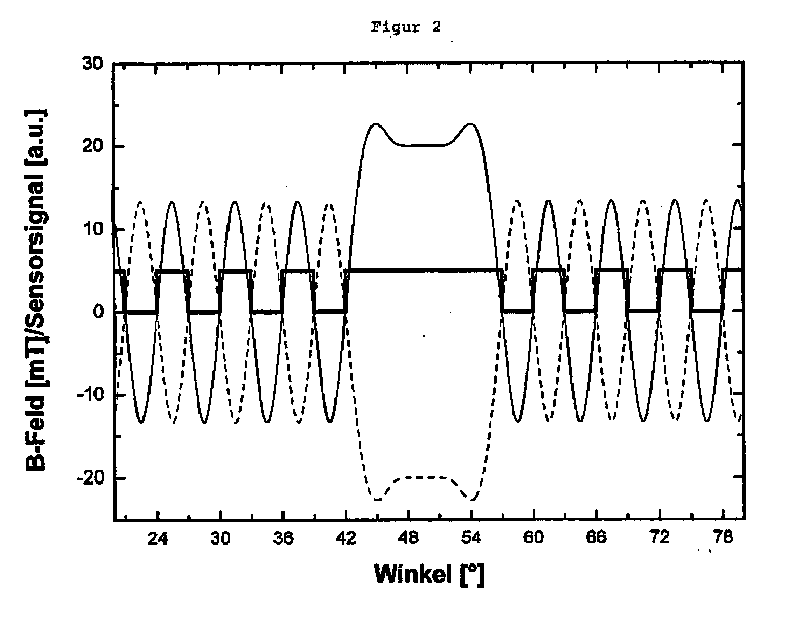

In der Figur 2 ist im Diagramm der Kurvenverlauf ausschnittsweise dargestellt, wie er sich im B-Feld der magnetischen Flussdichte in Tesla je nach Winkelstellung bei den Hallsensoren 9 und 10 ergibt. Sichtbar ist hier die Gleichmäßigkeit der regulären Pole 2, 3 und die in der Mitte liegende starke Abweichung bei den unregelmäßigen Polen 6 und 7.

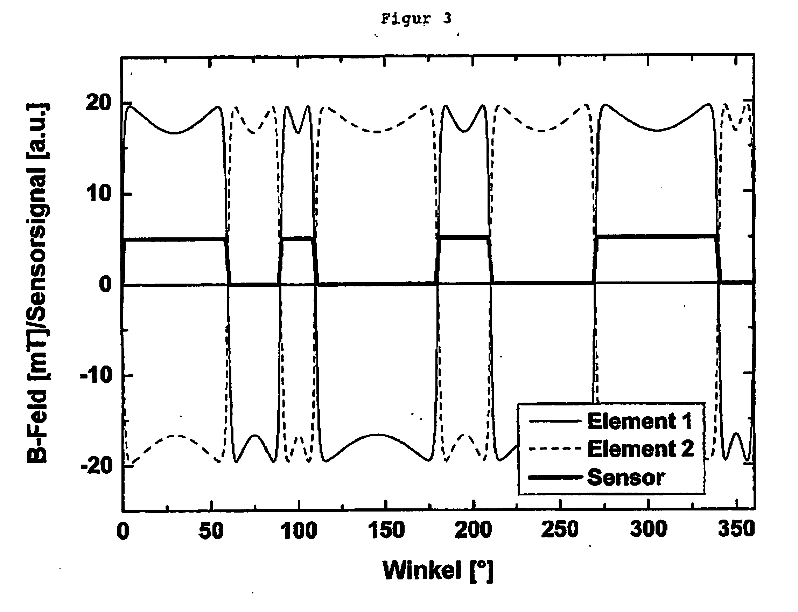

Die Figur 3 zeigt im Diagramm den Kurvenverlauf bei einer Vorrichtung mit Polen mit unterschiedlichen Polbreiten. Eine solche Vorrichtung wird bevorzugt bei Nockenwellen eingesetzt, da hier die Positionserfassung im Vordergrund steht.

**Patentansprüche**

1. Vorrichtung zur berührungsfreien Erfassung der Drehzahl und/oder Position eines um eine Achse drehbaren Geberteils mit einem permanentmagnetischen Encoder in Ringform mit in Umfangsrichtung abwechselnd angeordneten Nord- und Südpolen und wenigstens zwei unterschiedlichen Polbreiten sowie mit einem Abtastkopf mit einem Differenzsensor, wobei der Encoder als Doppelspurencoder (1) mit entgegengesetzter Magnetisierung der regulären Nord- und Südpole (2, 3) ausgebildet ist und je ein Sensorelement (9, 10) des Differenzsensors (8) einer der Encoderspuren (4, 5) zugeordnet ist, **dadurch gekennzeichnet, dass** der Differenzsensor ein Differenz-Hallsensor (8) ist und der axiale Abstand (A) zwischen den Sensorelementen (9, 10) kleiner als π x D x PB R geteilt durch 360° ist, wobei D der Durchmesser des Encoders (1) und PB R die Polbreiten der regulären Pole (2, 3) des Doppelspurencoders (1) ist.

2. Vorrichtung nach Anspruch 1, **dadurch gekennzeichnet, dass** der axiale Abstand (A) zwischen den Sensorelementen (9, 10) kleiner als π x D x PB R geteilt durch 2 x 360° ist.

3. Vorrichtung nach einem der Ansprüche 1 oder 2, **dadurch gekennzeichnet, dass** der axiale Abstand (A) zwischen den Sensorelementen (9, 10) einer halben Polbreite PB des kleinsten Pols des Doppelspurenencoders (1) entspricht.

4. Vorrichtung nach einem der Ansprüche 1 bis 3, **dadurch gekennzeichnet, dass** die Sensorelemente (9, 10) axial benachbart nebeneinander angebracht sind.

5. Vorrichtung nach dem der Ansprüche 1 bis 4, **dadurch gekennzeichnet, dass** die jeweils einander zugeordneten Polbreiten (PB S, PB N) auf den Spuren (4, 5) gleichgroß sind.

6. Vorrichtung nach einem der Ansprüche 1 bis 5, **dadurch gekennzeichnet, dass** der dass der Encoder (1) als Nockenwellenencoder mit mindestens gleichvielen Polpaaren, wie der Motor Zylinder hat, ausgebildet ist.

7. Vorrichtung nach einem der Ansprüche 1 bis 6, **dadurch gekennzeichnet, dass** der Encoder (1) regulären Pole (2, 3) und unregelmäßige Pole (6, 7) aufweist und die unregelmäßigen Pole (6, 7) der Encoderspuren (4, 5) in Umfangsrichtung eine größere Polbreite (13) haben, als die Polbreite (14) der regulären Pole (2, 3).

8. Vorrichtung nach Anspruch 7, **dadurch gekennzeichnet, dass** jeweils dem unregelmäßigen Pol (7) mit der größeren Polbreite (13) in der einen Spur (4) ein entgegengesetzter Pol (6) mit der gleichen Polbreite (13) auf der anderen Spur (5) zugeordnet ist.

**Claims**

1. Apparatus for detecting, in a contact-free manner, the rotation speed and/or position of a transmitter part, which can rotate about an axis, having a permanent-magnet encoder in the form of a ring with north and south poles which alternate in the circumferential direction and at least two different pole widths, and also having a scanning head having a differential sensor, with the encoder being in the form of a double-track encoder (1) with opposing magnetization of the regular north and south poles (2, 3) and in each case one sensor element (9, 10) of the differential sensor (8) being associated with one of the encoder tracks (4, 5), **characterized in that** the differential sensor is a differential Hall sensor (8) and the axial distance (A) between the sensor elements (9, 10) is less than $\pi$ x D x PB R divided by 360°, where D is the diameter of the encoder (1) and PB R is the pole widths of the regular poles (2, 3) of the double-track encoder (1).

2. Apparatus according to Claim 1, **characterized in that** the axial distance (A) between the sensor elements (9, 10) is less than $\Pi$ x D x PB R divided by 2 x 360°.

3. Apparatus according to either of Claims 1 and 2, **characterized in that** the axial distance (A) between the sensor elements (9, 10) corresponds to half the pole width PB of the smallest pole of the double-track encoder (1).

4. Apparatus according to one of Claims 1 to 3, **characterized in that** the sensor elements (9, 10) are mounted axially adjacent next to one another.

5. Apparatus according to one of Claims 1 to 4, **characterized in that** the respectively associated pole widths (PB S, PB N) on the tracks (4, 5) are of the same magnitude.

6. Apparatus according to one of Claims 1 to 5, **characterized in that** the encoder (1) is in the form of a camshaft encoder which has at least as many pole pairs as the motor has cylinders.

7. Apparatus according to one of Claims 1 to 6, **characterized in that** the encoder (1) has regular poles (2, 3) and irregular poles (6, 7), and the irregular poles (6, 7) of the encoder tracks (4, 5) have a greater pole width (13) in the circumferential direction than the pole width (14) of the regular poles (2, 3) .

8. Apparatus according to Claim 7, **characterized in that** the respective irregular pole (7) with the greater pole width (13) in one track (4) has an associated opposing pole (6) with the same pole width (13) on the other track (5).

**Revendications**

1. Dispositif de détection sans contact de la vitesse de rotation et/ou de la position d'une partie de codeur pouvant tourner autour d'un axe comprenant un codeur à aimantation permanente en forme d'anneau muni de pôles Nord et Sud disposés en alternance dans le sens du pourtour et au moins deux largeurs de pôle différente et comprenant une tête de palpage munie d'un capteur différentiel, le codeur étant réalisé sous la forme d'un codeur à double piste (1) avec une aimantation opposée des pôles Nord et Sud (2, 3) réguliers et un élément de détection (9, 10) du capteur différentiel (8) étant à chaque fois associé à l'une des pistes du codeur (4, 5), **caractérisé en ce que** le capteur différentiel est un capteur différentiel à effet Hall (8) et la distance axiale (A) entre les éléments de détection (9, 10) est inférieure à $\pi$ x D x PB R divisé par 360°, D désignant ici le diamètre du codeur (1) et PB R les largeurs de pôle des pôles réguliers (2, 3) du codeur à double piste (1).

2. Dispositif selon la revendication 1, **caractérisé en ce** la distance axiale (A) entre les éléments de détection (9, 10) est inférieure à $\pi$ x D x PB R divisé par 2x360°.

3. Dispositif selon l'une des revendications 1 ou 2, **caractérisé en ce** la distance axiale (A) entre les éléments de détection (9, 10) correspond à une moitié de largeur de pôle PB du plus petit pôle du codeur à double piste (1).

4. Dispositif selon l'une des revendications 1 à 3, **caractérisé en ce que** les éléments de détection (9, 10) sont montés l'un à côté de l'autre dans le sens axial.

5. Dispositif selon l'une des revendications 1 à 4, **caractérisé en ce que** les largeurs de pôle (PB S, PB N) respectivement associées les unes aux autres sur les pistes (4, 5) sont de la même taille.

6. Dispositif selon l'une des revendications 1 à 5, **caractérisé en ce que** le codeur (1) est réalisé sous la forme d'un codeur à arbre à cames avec au moins autant de paires de pôles que le moteur possède de cylindres.

7. Dispositif selon l'une des revendications 1 à 6, **caractérisé en ce que** le codeur (1) présente des pôles réguliers (2, 3) et des pôles irréguliers (6, 7) et les pôles irréguliers (6, 7) des pistes du codeur (4, 5) possèdent une largeur de pôle (13) dans le sens du pourtour supérieure à la largeur de pôle (14) des pôles réguliers (2, 3).

8. Dispositif selon la revendication 7, **caractérisé en ce qu'**au pôle irrégulier (7) ayant la largeur de pôle (13) plus grande dans l'une des pistes (4) est à chaque fois associé un pôle opposé (6) ayant la même largeur de pôle (13) sur l'autre piste (5).

Figur 1

Figur 2

Figur 3

EP 1 873 534 B1

**EP 1 873 534 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030116703 A1
- EP 0496918 A1

- EP 0825420 A1